# EUROPÄISCHE PATENTANMELDUNG

(11) **EP 3 103 585 A1**
(43) Veröffentlichungstag der Anmeldung: **14.12.2016**
(21) Anmeldenummer: 15171299.9
(22) Anmeldetag: 10.06.2015
(51) Int. Cl.: B23Q 11/10, B23B 51/04, B28D 7/02, B23Q 11/12, E21B 10/38

(54) **AKTIVE WASSERKÜHLUNG EINER ANTRIEBSWELLE FÜR BOHRGERÄTE**

(71) Anmelder: HILTI Aktiengesellschaft, 9494 Schaan (LI)
(72) Erfinder: Baxivanelis, Konstantin, 86916 Kaufering (DE); Reichenberger, Thomas, 86929 Untermühlhausen (DE)
(74) Vertreter: Hilti Aktiengesellschaft Corporate Intellectual Property

(57) **Zusammenfassung**

Antriebswelle (6) für eine Werkzeugmaschine (1), beispielsweise eine Kernbohrmaschine, verbindbar mit einem Bohrwerkzeug (2), insbesondere einer Bohrkrone, enthaltend einen sich im Wesentlichen über die gesamte Länge der Antriebswelle (6) und entlang der Rotationsachse (M) erstreckenden Hohlraum (11), wobei der Hohlraum (11) wenigstens eine Zuflußöffnung enthält, durch die Wasser (W) entlang der Antriebswelle in das Bohrwerkzeug zuführbar ist,
**dadurch gekennzeichnet, dass**eine Einsatzvorrichtung (14) in dem Hohlraum (11) vorgesehen ist, durch die das Wasser (W) zum Kühlen der Antriebswelle (6) zuerst in eine erste Richtung (A) und anschließend in eine zweite Richtung (B) geführt wird, wobei die Einsatzvorrichtung (14) ein erstes gebogenes Führungselement (13) sowie ein zweites gebogenes Führungselement (15) enthält zum Trennen des Wassers (W), welches in die erste Richtung (A) geführt wird, von dem Wasser (W), welches in die zweite Richtung (B) geführt wird, und wobei die Querschnittsfläche (Q1) des ersten gebogenen Führungselements (15) punktsymmetrisch um eine Mittelängsachse (M) zu der Querschnittsfläche (Q2) des zweiten gebogenen Führungselements (15) ausgestaltet ist.

## Beschreibung

Die vorliegende Erfindung bezieht sich auf eine Antriebswelle für eine Werkzeugmaschine, beispielsweise eine Kernbohrmaschine, verbindbar mit einem Bohrwerkzeug, insbesondere einer Bohrkrone, enthaltend einen sich im Wesentlichen über die gesamte Länge der Antriebswelle und entlang der Rotationsachse erstreckenden Hohlraum wenigstens eine Zuflußöffnung enthält, durch die Wasser entlang der Antriebswelle in das Bohrwerkzeug zuführbar ist.

Darüber hinaus bezieht sich die Erfindung auf eine Einsatzvorrichtung zum Einführen und Positionieren in einem Hohlraum einer Antriebswelle.

Eine Wasserversorgungsanlage ist eine wesentliche und unverzichtbare Notwendigkeit bei nahezu jeder Kernbohrarbeit sowie auch bei zahlreichen anderen Arbeiten mit großen und leistungsstarken Werkzeugmaschinen (wie z.B. Sägen, Trennschleifern oder ähnliches). Insbesondere bei der Verwendung eines Kernbohrgeräts zum Bohren von Löchern in mineralisches Gestein mittels einer von dem Kernbohrgerät in Drehung versetzten Bohrkrone ist ein Spülen der Bohrkrone sehr notwendig. Durch das zum Spülen verwendete Wasser werden das beim Kernbohren losgelöste Gestein und der dabei entstehende Staub in Form von Bohrschlamm aus der Bohrkrone sowie aus dem Bohrloch geschwemmt. Ohne dieses Ausschwemmen des Bohrschlamms würde die Bohrkrone innerhalb kürzester Zeit heisslaufen und sich so in dem Bohrloch festsetzen, dass ein Weiterbohren nicht mehr möglich wäre.

Eine Wasserversorgungsanlage zur Verwendung mit einer Werkzeugmaschine, wie z.B. einer Kernbohrmaschine, gemäß dem Stand der Technik ist beispielsweise in der deutsche Patentanmeldung DE 10 2006 035 345 A1 offenbart.

Die bei Kernbohrarbeiten verwendeten Kernbohrgeräte sind oftmals äußerst leistungsstark und verfügen dementsprechend über einen hohen Energieverbrauch. Darüber hinaus stellt die Wärmeentwicklung während der Durchführung von Kernbohrarbeiten in Kernbohrgeräten ein beachtliches Problem dar. Eine zu hohe Wärmeentwicklung im Inneren eines Kernbohrgeräts kann dessen Leistungsfähigkeit und damit die Effizienz eines Kernbohrgeräts deutlich verringern. Es ist des Weiteren auch möglich, dass es zu einer dauerhaften Beschädigung des gesamten Kernbohrgeräts oder einzelner Bauteile kommt. Außerdem besteht auch die Gefahr, dass sich ein Anwender des Kernbohrgeräts an einer übermäßig aufgeheizten Außenwand, die durch die Wärmeentwicklung im Inneren des Kernbohrgeräts verursacht wird, verletzen kann.

Es ist daher **Aufgabe** der vorliegenden Erfindung die vorstehend beschriebenen Probleme zu lösen und insbesondere eine Antriebswelle für eine Werkzeugmaschine, beispielsweise eine Kernbohrmaschine, verbindbar mit einem Bohrwerkzeug, insbesondere einer Bohrkrone, zur Verfügung zu stellen, mit der Beschädigungen an der Werkzeugmaschine sowie hitzebedingte Verletzungen des Anwenders effizient vermieden werden können. Darüber hinaus wird eine Einsatzvorrichtung zum Einführen und Positionieren in einem Hohlraum einer Antriebswelle zur Verfügung gestellt, mit der Beschädigungen an der Werkzeugmaschine sowie hitzebedingte Verletzungen des Anwenders effizient vermieden werden können.

Diese Aufgabe wird erfindungsgemäss durch den Gegenstand des unabhängigen Anspruchs 1 und 5 gelöst. Weitere vorteilhafte Ausgestaltungsformen der vorliegenden Erfindung finden sich in den abhängigen Ansprüchen.

Bereitgestellt wird hierzu eine Antriebswelle für eine Werkzeugmaschine, beispielsweise eine Kernbohrmaschine, verbindbar mit einem Bohrwerkzeug, insbesondere einer Bohrkrone, enthaltend einen sich im Wesentlichen über die gesamte Länge der Antriebswelle und entlang der Rotationsachse erstreckenden Hohlraum, wobei der Hohlraum wenigstens eine Zuflußöffnung enthält, durch die Wasser entlang der Antriebswelle in das Bohrwerkzeug zuführbar ist.

Die Antriebswelle kennzeichnet sich erfindungsgemäß dadurch, dass eine Einsatzvorrichtung in dem Hohlraum vorgesehen ist, durch die das Wasser zum Kühlen der Antriebswelle zuerst in eine erste Richtung und anschließend in eine zweite Richtung geführt wird, wobei die Einsatzvorrichtung ein erstes gebogenes Führungselement sowie ein zweites gebogenes Führungselement enthält zum Trennen des Wassers, welches in die erste Richtung geführt wird, von dem Wasser, welches in die zweite Richtung geführt wird, und wobei die Querschnittsfläche des ersten gebogenen Führungselements punktsymmetrisch um eine Mittelängsachse zu der Querschnittsfläche des zweiten gebogenen Führungselements ausgestaltet ist.

Hierdurch wird das Wasser, welches eigentlich nur für das Spülen der Bohrkrone vorgesehen ist, effizient zum Kühlen der Antriebswelle und nachfolgend zum Kühlen des Kernbohrgeräts verwendet. Durch das Führen des Wassers in eine erste und eine zweite Richtung wird das Wasser länger durch den Hohlraum der Antriebswelle geleitet, wodurch eine höhere Wärmeaufnahme durch das Wasser und damit eine bessere Kühlung erzeugt werden kann. Aufgrund der gebogenen Ausgestaltung des ersten und zweiten Führungselements kann eine bessere Abdichtung von der Einsatzvorrichtung zu dem Hohlraum der Antriebswelle erreicht werden.

Gemäß einer vorteilhaften Ausführungsform der vorliegenden Erfindung kann es möglich sein, dass die die Einsatzvorrichtung ein Stützelement enthält zum Stützen der Einsatzvorrichtung in dem Hohlraum. Durch die Verwendung des Stützelements kann ein besseres Abstützen der Einsatzvorrichtung in dem Hohlraum gewährleistet werden.

Entsprechend einer weiteren vorteilhaften Ausführungsform der vorliegenden Erfindung kann es möglich sein, dass die Einsatzvorrichtung wenigstens ein Positionierelement enthält, welche in eine korrespondierende Positionieröffnung an dem Hohlraum eingreifbar ist und wodurch eine Relativbewegung zwischen der Einsatzvorrichtung und der Antriebswelle verhindert wird.

Gemäß einer zusätzlichen vorteilhaften Ausführungsform der vorliegenden Erfindung ist es möglich, dass die Einsatzvorrichtung wenigstens ein Trennwandelement enthält zum Führen des Wassers in die erste Richtung sowie zum Sperren der Einsatzvorrichtung in dem Hohlraum. Hierdurch wird erreicht, dass das Wasser, welches in den Hohlraum eintritt, in eine vorbestimmte Fließrichtung fließt.

Bezüglich der Einsatzvorrichtung wird die Aufgabe dadurch gelöst, dass die Einsatzvorrichtung zum Einführen und Positionieren in einem Hohlraum einer vorbeschriebenen Antriebswelle gestaltet ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine schematische Darstellung eines Teils einer Kernmaschine mit einer Bohrkrone;
- Fig. 2: einen Längsquerschnitt durch eine erfindungsgemäße Antriebswelle der Kernbohrmaschine und durch Bestandteile des Gehäuses der Kernbohrmaschine;
- Fig. 3: einen Längsquerschnitt durch die erfindungsgemäße Antriebswelle der Kernbohrmaschine zusammen mit einer Einsatzvorrichtung;
- Fig. 4: eine erste Seitenansicht auf die Einsatzvorrichtung;
- Fig. 5: eine erste Querschnittsansicht durch die Antriebswelle und die Einsatzvorrichtung;
- Fig. 6: eine Draufsicht auf die Einsatzvorrichtung; und
- Fig. 7: eine zweite Querschnittsansicht durch die Antriebswelle und die Einsatzvorrichtung.

### Ausführungsbeispiel:

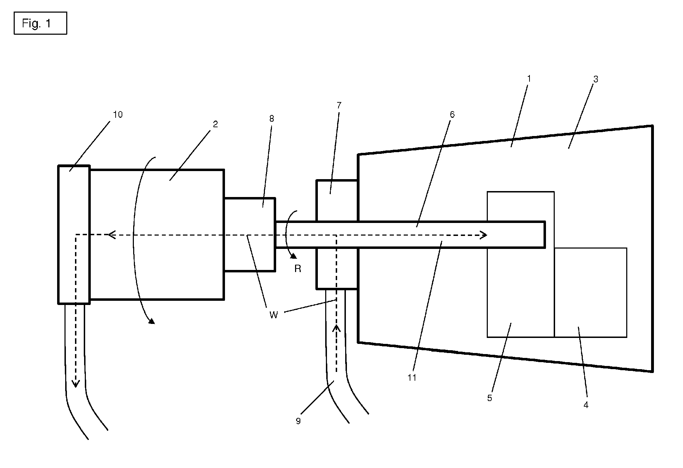

Fig. 1 zeigt eine schematische Darstellung einer Werkzeugmaschine 1 mit einem Bohrwerkzeug 2. Die Werkzeugmaschine 1 ist in Form einer Kernbohrmaschine und das Bohrwerkzeug 2 ist in Form einer Bohrkrone dargestellt.

Die Kernbohrmaschine 1 enthält im Wesentlichen ein Gehäuse 3, einen Elektromotor 4, ein Getriebe 5, eine Antriebswelle 6, einen Spülkopf 7 und eine Werkzeugaufnahme 8. Der Elektromotor 4, das Getriebe 5 und ein Teil der Antriebswelle 6 sind in dem Gehäuse 3 positioniert.

Der Elektromotor 4 erzeugt ein Drehmoment und überträgt diese mit Hilfe des Getriebes 5 auf die Antriebswelle 6, welche in eine Drehbewegung in Drehrichtung R versetzt wird. Die Antriebswelle 6 enthält ein erstes Ende 6a und ein zweites Ende 6b. Das erste Ende 6a ragt aus dem Gehäuse 3 heraus. Das zweite Ende 6b ist zur Aufnahme des im Elektromotor 4 erzeugten Drehmoments mit dem Getriebe 5 verbunden.

Die Werkzeugaufnahme 8 ist an dem ersten Ende 6a der Antriebswelle 6 drehfest positioniert. Über die Werkzeugaufnahme 8 ist die Antriebswelle 6 drehfest mit dem als Bohrkrone ausgestalteten Werkzeug 2 verbunden. Die Bohrkrone 2 enthält ein erstes Ende 2a und ein zweites Ende 2b.

Der Spülkopf 7 enthält einen Wasserzufluss 9, mit dem Wasser W zum Kühlen und Spülen aus einem (nicht gezeigten) Wasservorrat an die Kernbohrmaschine 1, Antriebswelle 6 und insbesondere an die Bohrkrone 2 gefördert werden kann. An dem ersten (vorderen) Ende 2a der Bohrkrone 2 ist eine Absaugvorrichtung 10 positioniert, mit der das Gestein und der Staub durch das Wasser W in Form von Bohrschlamm aus der Bohrkrone 2 gelangt.

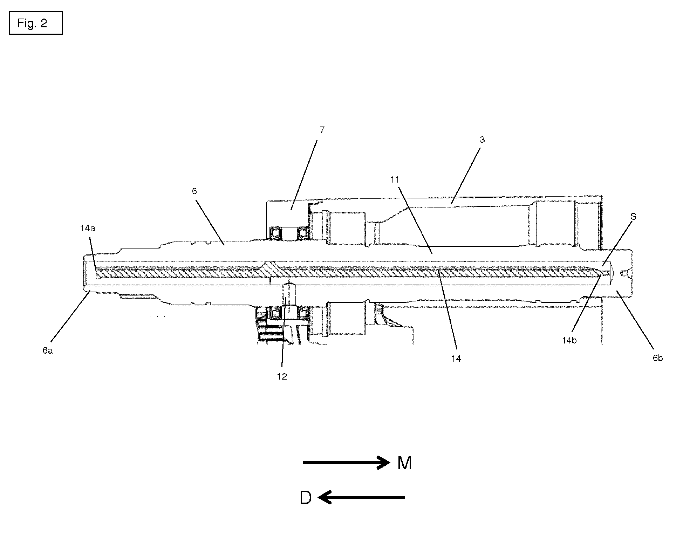

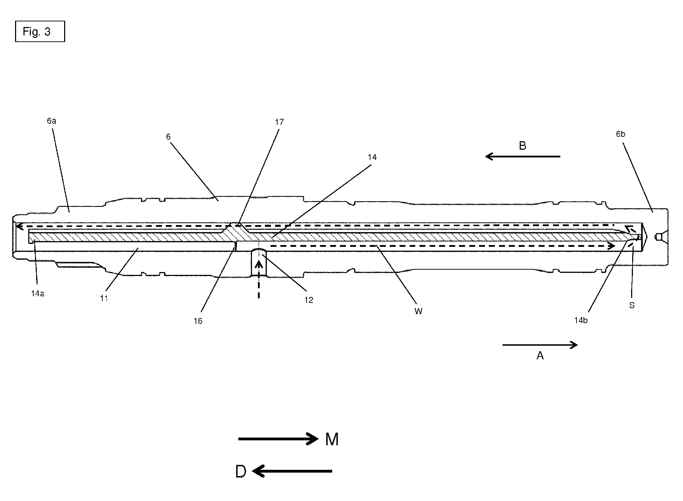

Fig. 2 zeigt einen Querschnitt durch die Antriebswelle 6 in einem Ausschnitt des Gehäuses 3 der Kernbohrmaschine 1. Die Antriebswelle 6 enthält einen zylindrischen Hohlraum 11 in Form eines Sacklochs. Das Sackloch 11 weist ein erstes Ende 11a und ein zweites Ende 11 b auf. Das erste Ende 11 a stellt die Öffnung in dem Sackloch 11 dar. Das zweite Ende 11 b ist ein geschlossenes Ende. Wie in Fig. 2 und 3 dargestellt, enthält die Antriebswelle 6 in der Mantelwand bzw. Innenwand 6c eine Durchgangsbohrung 12. Durch die Durchgangsbohrung 12 kann Wasser W in das Innere der Antriebswelle 6 und damit in den als Sackloch ausgestalteten Hohlraum 11 gelangen.

In dem Sackloch 11 ist die Einsatzvorrichtung 14 positioniert und wieder lösbar fixiert. Die Einsatzvorrichtung 14 dient dazu das Wasser W zum Kühlen der Antriebswelle 6 und innerhalb der Antriebswelle 6 zuerst in eine erste Richtung A und anschließend in eine zweite Richtung B zu führen.

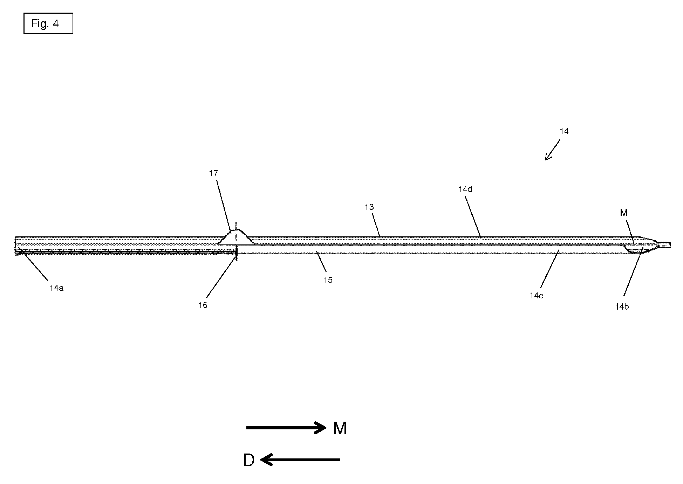

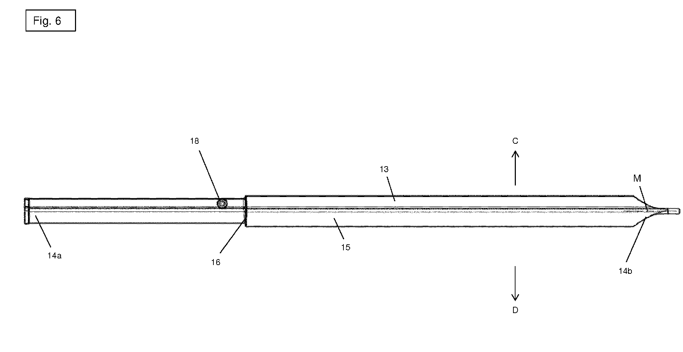

Wie in Fig. 2, 3, 4 und 6 gezeigt, enthält die Einsatzvorrichtung 14 ein erstes Ende 14a, ein zweites Ende 14b, eine erste Oberfläche 14c und eine zweite Oberfläche 14d. Das erste Ende 14a ist im Wesentlichen senkrecht zur Längserstreckung der Einsatzvorrichtung 14 ausgestaltet. Das zweite Ende 14b ist im Wesentlichen spitzzulaufend ausgestaltet. Wie insbesondere in Fig. 2 und 3 dargestellt, schließt das zweite Ende 14b der Einsatzvorrichtung 14 nicht flächig mit dem zweiten Ende 11 b des Sacklochs 11 ab, sodass eine Aussparung S zwischen dem zweiten Ende 14b der Einsatzvorrichtung 14 und dem zweiten Ende 11 b des Sacklochs 11 besteht, wenn die Einsatzvorrichtung 14 in dem Sackloch 11 positioniert ist. Die Aussparung S dient dazu, Wasser W an dem zweiten Ende 14b um die Einsatzvorrichtung 14 herumströmen zu lassen. Mit anderen Worten: das Wasser W wird an der Aussparung S von der ersten Oberfläche 14c zu der zweiten Oberfläche 14d geleitet und ändert damit seine Fließrichtung von der ersten Richtung A zu der zweiten Richtung B (vgl. Fig. 3).

Die Einsatzvorrichtung 14 enthält des Weiteren ein erstes Führungselement 13 sowie ein zweites Führungselement 15, die sich gegenüberliegend entlang der gesamten Länge der Einsatzvorrichtung 14 erstrecken. Das erste und zweite Führungselement 13, 15 dient zum Trennen des Wassers W, welches in die erste Richtung A geführt wird, von dem Wasser W, welches in die zweite Richtung B geführt wird.

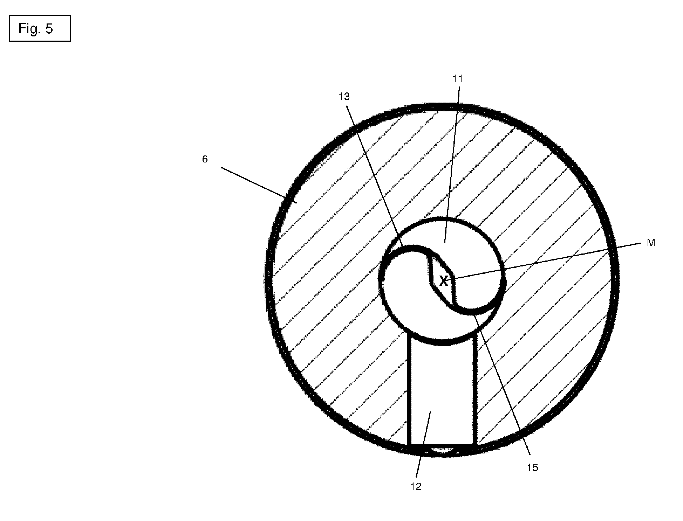

Sowohl das erste Führungselement 13 als auch das zweite Führungselement 15 sind im Wesentlichen als gebogenes Flachprofil ausgestaltet. Die Biegung des ersten Führungselements 13 verläuft in Richtung C von der Mittelängsachse M der Einsatzvorrichtung 14 nach außen und die Biegung des zweiten Führungselements 15 verläuft in Richtung D von der Mittelängsachse M der Einsatzvorrichtung 14 nach außen. Das erste Führungselement 13 und zweite Führungselement 15 ist dabei jeweils so breit, dass ein gebogener vorderer Bereich des Flachprofils des ersten Führungselements 13 und des zweiten Führungselements 15 gegen die Mantelwand bzw. Innenwand 6c des Sacklochs 11 gedruckt wird, wenn sich die Einsatzvorrichtung 14 im Sackloch 11 befindet (vgl. Fig. 5). Das Flachprofil des ersten Führungselements 13 und des zweiten Führungselements 15 ist dabei in Richtung C bzw. D federnd und elastisch ausgestaltet. Durch das Herandrücken des gebogenen vorderen Bereichs des Flachprofils des ersten und zweiten Führungselements 13, 15 findet eine Abdichtung zwischen der Einsatzvorrichtung 14 und dem Sackloch 11 statt.

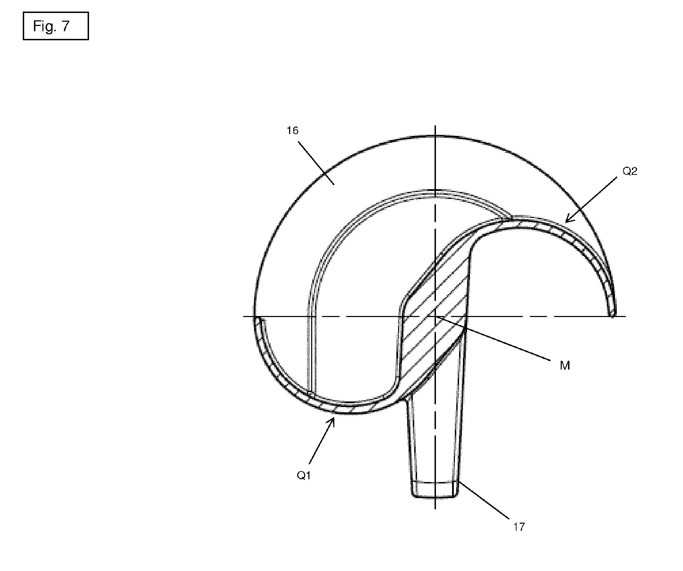

Wie in Fig. 5 und 7 dargestellt, weist das erste gebogene Führungselement 13 eine Querschnittsfläche Q1 und das zweite gebogene Führungselement 15 eine Querschnittsfläche Q2 auf. Die Querschnittsfläche Q1 ist dabei punktsymmetrisch um die Mittelängsachse M zu der Querschnittsfläche Q2 ausgestaltet. Die Querschnittsfläche der Einsatzvorrichtung 14 weist damit im Wesentlichen eine S-Form auf (vgl. Fig. 5 und 7).

Darüber hinaus enthält die Einsatzvorrichtung 14 ein Trennwandelement 16 (vgl. Fig. 2, 3, 4, 6 und 7). Das Trennwandelement 16 ist im Wesentlichen in Form einer halbkreisförmigen Scheibe ausgestaltet, welche an der ersten Oberfläche 14c der Einsatzvorrichtung 14 angebracht ist. Die Außenkante des Trennwandelements 16 korrespondiert mit der Mantelwand bzw. Innenwand 6c des zylindrischen Hohlraums (Sackloch) 11. Des Weiteren ist das Trennwandelement 16 etwas überdimensioniert sowie elastisch federnd ausgestaltet, sodass beim Einführen der Einsatzvorrichtung 14 in das Sackloch 11 ein gewisser Widerstand überwunden werden muss und die Einsatzvorrichtung 14 das Trennwandelement 16 an die Mantelwand bzw. Innenwand 6c presst. Hierdurch ist die Einsatzvorrichtung 14 sicher in dem Sackloch 11 positioniert und ein zu leichtes Entnehmen der Einsatzvorrichtung 14 aus dem Sackloch 11 erschwert. Darüber hinaus wird durch die Überdimensionierung sowie durch den vorstehend beschriebenen Widerstand eine optimale Abdichtung zwischen der halbkreisförmigen Scheibe und der Mantelwand bzw. Innenwand 6c erreicht. Das Trennwandelement 16 erreicht damit, dass die Einsatzvorrichtung 14 gegen die Mantelwand bzw. Innenwand 6c des zylindrischen Hohlraums (Sackloch) 11 abdichtet, sodass Wasser W, welches durch die Durchgangsbohrung 12 in das Sackloch 11 gelangt, lediglich in Richtung A strömen kann (vgl. Fig. 3).

Gemäß einer vorteilhaften Ausführungsform enthält die Einsatzvorrichtung 14 außerdem ein Stützelement 17 (vgl. Fig. 2, 3, 4 und 7). Das Stützelement 17 ist im Wesentlichen in Form einer Finne ausgestaltet und erstreckt sich strömungsgünstig entlang der Längserstreckung der Einsatzvorrichtung 14. Das Stützelement 17 dient dazu, die Einsatzvorrichtung 14 in dem zylindrischen Hohlraum (Sackloch) 11 zu stützen.

Entsprechend einer weiteren vorteilhaften Ausführungsform enthält die Einsatzvorrichtung 14 ansonsten ein Positionierelement 18 (vgl. Fig. 2, 3, 4 und 7). Das Positionierelement 18 ist im Wesentlichen in Form einer zylindrischen Erhebung ausgestaltet und ist an der ersten Oberfläche 14c der Einsatzvorrichtung 14 positioniert. Das freie Ende des Positionierelements 18 dient dazu, in eine entsprechende bzw. korrespondierende Aussparung in dem zylindrischen Hohlraum (Sackloch) 11 eingeführt zu werden, sodass die Einsatzvorrichtung 14 möglichst genau, d.h. an eine vorbestimmten Stelle und Ausrichtung, in dem zylindrischen Hohlraum (Sackloch) 11 positioniert bzw. ausgerichtet werden kann. Die korrespondierende Aussparung in dem zylindrischen Sackloch 11 ist in den Figuren nicht dargestellt.

Die erste Oberfläche 14c der Einsatzvorrichtung 14 dient zum Führen des Wassers W, welches zum Kühlen und Spülen in die Antriebswelle 6 gefördert ist, in die erste Richtung A und die zweite Oberfläche 14d der Einsatzvorrichtung 14 dient zum Führen des Wassers W in die zweite Richtung B. Mit Hilfe der ersten Oberfläche 14c wird das Wasser W zu dem zweiten Ende 11b des als Sackloch ausgestalteten Hohlraums 11 gefördert (Richtung A). Das Wasser W befindet sich dabei zum Kühlen der Antriebswelle 6 zwischen der ersten Oberfläche 14c und der Mantelwand bzw. Innenwand 6c des Hohlraums 11.

Wenn das Wasser W an dem zweiten Ende 14b der Einsatzvorrichtung 14 angelangt ist, gelangt das Wasser W von der ersten Oberfläche 14c über die Aussparung S zwischen dem zweiten Ende 14b der Einsatzvorrichtung 14 und dem zweiten Ende 11 b des Hohlraums 11 zu der zweiten Oberfläche 14d der Einsatzvorrichtung 14. Wie bereits vorstehend beschrieben, kann durch diese Aussparung S das Wasser W um die Einsatzvorrichtung 14 herumgeleitet werden und von der ersten Oberfläche 14c zu der zweiten Oberfläche 14d gelangen (s. gebogener Pfeil in Fig. 3).

An der zweiten Oberfläche 14d wird das Wasser W zu dem ersten Ende 11a des als Sackloch ausgestalteten Hohlraums 11 gefördert (Richtung B). Das Wasser W befindet sich dabei zum Kühlen der Antriebswelle 6 zwischen der zweiten Oberfläche 14d und der Mantelwand bzw. Innenwand 6c des Hohlraums 11.

Durch das offene erste Ende 6a der Antriebswelle 6 gelangt das Wasser W zum Kühlen und Spülen durch die hohle Werkzeugaufnahme 8 zu dem als Bohrkrone ausgestalteten Bohrwerkzeug 2.

Wenn das Wasser W entlang der ersten und zweiten Oberfläche 14c, 14d der Einsatzvorrichtung 14 geleitet wird, nimmt das Wasser W die Wärmeenergie der Kernbohrmaschine 1 und insbesondere der Antriebswelle 6 auf und kühlt damit die Kernbohrmaschine 1 sowie die Antriebswelle 6 ab.

Wenn das Wasser W, welches für das Spülen der Bohrkrone 2 vorgesehen ist, durch die Durchgangsbohrung 12 in den Hohlraum 11 der Antriebswelle 6 gelangt, kann die Antriebswelle 6 und folglich das gesamte Kernbohrgerät 1 effizient gekühlt werden. Durch das Führen des Wassers W in eine erste Richtung A und eine zweite Richtung B wird das Wasser W länger durch den Hohlraum 11 der Antriebswelle 6 geleitet, wodurch eine höhere Wärmeaufnahme durch das Wasser W und damit eine effiziente Kühlung der Antriebswelle 6 und des gesamten Kernbohrgeräts 1 erzeugt werden kann.

Dadurch, dass das erste Führungselement 13 und das zweite Führungselement 15 im Wesentlichen als gebogenes Flachprofil ausgestaltet sind, kann eine bessere Abdichtung der Einsatzvorrichtung 14 in den Sackloch 11 erreicht werden.

### Bezugszeichen

- 1: Werkzeugmaschine
- 2: Bohrwerkzeug
- 2a: erstes Ende des Bohrwerkzeugs
- 2b: zweites Ende des Bohrwerkzeugs
- 3: Gehäuse
- 4: Elektromotor
- 5: Getriebe
- 6: Antriebswelle
- 6a: erstes Ende der Antriebswelle
- 6b: zweites Ende der Antriebswelle
- 6c: Mantelwand / Innenwand des zylindrischen Hohlraums (Sackloch)
- 7: Spülkopf
- 8: Werkzeugaufnahme
- 9: Wasserzufluss
- 10: Absaugvorrichtung
- 11: Hohlraum / Sackloch
- 11a: erstes Ende des Hohlraums / Sacklochs
- 11b: zweites Ende des Hohlraums / Sacklochs
- 12: Durchgangsbohrung
- 13: erstes Führungselement
- 14: Einsatzvorrichtung
- 14a: erstes Ende der Einsatzvorrichtung
- 14b: zweites Ende der Einsatzvorrichtung
- 14c: erste Oberfläche der Einsatzvorrichtung
- 14d: zweite Oberfläche der Einsatzvorrichtung
- 15: zweites Führungselement
- 16: Trennwandelement
- 17: Stützelement
- 18: Positionierelement
- A: erste Richtung
- B: zweite Richtung
- Q1: Querschnittsfläche des ersten Führungselements
- Q2: Querschnittsfläche des zweiten Führungselements
- R: Drehrichtung

## Patentansprüche

1. Antriebswelle (6) für eine Werkzeugmaschine (1), beispielsweise eine Kernbohrmaschine, verbindbar mit einem Bohrwerkzeug (2), insbesondere einer Bohrkrone, enthaltend einen sich im Wesentlichen über die gesamte Länge der Antriebswelle (6) und entlang der Rotationsachse (M) erstreckenden Hohlraum (11), wobei der Hohlraum (11) wenigstens eine Zuflußöffnung enthält, durch die Wasser (W) entlang der Antriebswelle in das Bohrwerkzeug zuführbar ist,
**dadurch gekennzeichnet, dass** eine Einsatzvorrichtung (14) in dem Hohlraum (11) vorgesehen ist, durch die das Wasser (W) zum Kühlen der Antriebswelle (6) zuerst in eine erste Richtung (A) und anschließend in eine zweite Richtung (B) geführt wird, wobei die Einsatzvorrichtung (14) ein erstes gebogenes Führungselement (13) sowie ein zweites gebogenes Führungselement (15) enthält zum Trennen des Wassers (W), welches in die erste Richtung (A) geführt wird, von dem Wasser (W), welches in die zweite Richtung (B) geführt wird, und wobei die Querschnittsfläche (Q1) des ersten gebogenen Führungselements (15) punktsymmetrisch um eine Mittelängsachse (M) zu der Querschnittsfläche (Q2) des zweiten gebogenen Führungselements (15) ausgestaltet ist.

2. Antriebswelle (6) nach Anspruch 1,
**dadurch gekennzeichnet, dass** die Einsatzvorrichtung (14) ein Stützelement (17) enthält zum Stützen der Einsatzvorrichtung (14) in dem Hohlraum (11).

3. Antriebswelle (6) nach Anspruch 1 oder 2,
**dadurch gekennzeichnet, dass** die Einsatzvorrichtung (14) wenigstens ein Positionierelement (18) enthält, welche in eine korrespondierende Positionieröffnung an dem Hohlraum (11) eingreifbar ist und wodurch eine Relativbewegung zwischen der Einsatzvorrichtung (14) und der Antriebswelle (6) verhindert wird.

4. Antriebswelle (6) nach wenigstens einem der Ansprüche 1 bis 3,
**dadurch gekennzeichnet, dass** die Einsatzvorrichtung (14) wenigstens ein Trennwandelement (16) enthält zum Führen des Wassers in die erste Richtung (A) sowie zum Sperren der Einsatzvorrichtung (14) in dem Hohlraum (11).

5. Einsatzvorrichtung (14) zum Einführen und Positionieren in einem Hohlraum (11) einer Antriebswelle (6) nach wenigstens einem der Ansprüche 1 bis 4.
